# EUROPEAN PATENT SPECIFICATION

(11) **EP 2 045 527 B1**
(45) Date of publication and mention of the grant of the patent: **17.08.2016**
(21) Application number: 08159553.0
(22) Date of filing: 02.07.2008
(51) Int. Cl.: F23R 3/10

(54) **Faceted dome assemblies for gas turbine engine combustors**
Facettierte Kuppelanordnungen für Gasturbinen-Verbrennungsmotoren
Ensembles de dôme à facettes pour chambres de combustion de turbines à gaz

(30) Priority: 04.10.2007 US 867195
(43) Date of publication of application: 08.04.2009
(73) Proprietor: Honeywell International Inc., Morris Plains, NJ 07950 (US)
(72) Inventor: Pardington, Ronald B., Gilbert, AZ 85233 (US); Kettinger, Jonathan N., Litchfield Park, AZ 85340 (US)
(74) Representative: Houghton, Mark Phillip

(56) References cited:
- EP-A1- 1 148 299
- EP-A1- 1 818 616
- EP-A2- 1 826 490
- US-A- 2 882 681
- US-A- 4 365 470
- US-A- 5 934 067

## Description

The present invention generally relates to gas turbine engines, and more particularly relates to combustors for gas turbine engines.

### BACKGROUND OF THE INVENTION

A gas turbine engine may be used to power various types of vehicles and systems. A particular type of gas turbine engine that may be used to power aircraft is a turbofan gas turbine engine. A turbofan gas turbine engine may include, for example, five major sections: a fan section, a compressor section, a combustor section, a turbine section, and an exhaust section.

The fan section typically is positioned at the front or "inlet" section of the engine and includes a fan that induces air from the surrounding environment into the engine and accelerates a fraction of this air toward the compressor section. The remaining fraction of air induced into the fan section is accelerated into and through a bypass plenum and out the exhaust section. The compressor section raises the pressure of the air it receives from the fan section to a relatively high level.

The compressed air from the compressor section then enters the combustor section where a ring of fuel nozzles injects a steady stream of fuel. The injected fuel is ignited by a burner, which significantly increases the energy of the compressed air. The high-energy compressed air from the combustor section then flows into and through the turbine section, causing radially mounted turbine blades to rotate and generate energy.

EP 1 826 470 discloses a dome assembly according to the preamble of claim 1.

Due to the high temperatures involved, combustor sections of gas turbine engines typically include a plurality of heat shields, which are often located near a protective dome of the combustor section. Generally, there are gaps formed between the heat shields and the protective dome, for example to allow for the passage of cooling air therethrough and/or to allow for possible thermal expansion. While such heat shields are generally flat, the protective dome disposed nearby is generally a single structure forming an annular ring. As a result, the gaps are typically not uniform throughout the protective dome. This may cause uneven heat distribution and resulting "hot spots", and/or wear on the combustor and/or components thereof.

Accordingly, it is desirable to provide an improved dome assembly for a gas turbine engine that potentially results in more uniform gaps between the dome assembly and heat shields disposed proximate thereto, and/or that results in a more even heat distribution or in reduced wear on the combustor or components thereof. It is further desirable to provide a combustor for a gas turbine engine with an improved dome assembly that potentially results in more uniform gaps between the dome assembly and heat shields disposed proximate thereto, and/or that results in a more even heat distribution or in reduced wear on the combustor or components thereof. It is further desirable to provide a gas turbine engine with a combustor having an improved dome assembly that potentially results in more uniform gaps between the dome assembly and heat shields disposed proximate thereto, and/or that results in a more even heat distribution or in reduced wear on the combustor or components thereof. Furthermore, other desirable features and characteristics of the present invention will be apparent from the subsequent detailed description and the appended claims, taken in conjunction with the accompanying drawings and the foregoing technical field and background.

### SUMMARY OF THE INVENTION

The present invention provides an assembly as defined in claim 1. The assembly may include the features of any one or more of dependent claims 2 to 4.
The present invention also provides a combuster as defined in claim 5. The combuster may include the features of any one or more of dependent claims 6 to 9.
The present invention also provides an engine as defined in claim 10.

In accordance with an exemplary embodiment of the present invention, a dome assembly for a gas turbine engine is provided. The dome assembly comprises a plurality of faceted segments and a plurality of openings. The plurality of faceted segments are coupled together to form a dome structure that is configured to be disposed between an inner liner and an outer liner that circumscribes the inner liner. The plurality of openings are each formed within a respective faceted segment, and are configured to at least partially house an atomizer therein. Each faceted segment is at least substantially flat.

In accordance with another exemplary embodiment of the present invention, a combustor for a gas turbine engine is provided. The combustor comprises an inner liner, an outer liner, and a dome assembly. The outer liner circumscribes the inner liner. The dome assembly is coupled to and disposed between the inner liner and the outer liner. The dome assembly comprises a plurality of faceted segments. Each faceted segment is at least substantially flat.

In accordance with a further exemplary embodiment of the present invention, a turbine engine is provided. The turbine engine comprises a compressor, a combustor, and a turbine. The compressor has an inlet and an outlet, and is operable to supply compressed air. The combustor is coupled to receive at least a portion of the compressed air from the compressor, and is operable to supply combusted air. The combustor comprises an inner liner, an outer liner, and a dome assembly. The outer liner circumscribes the inner liner. The dome assembly is coupled to and disposed between the inner liner and the outer liner. The dome assembly comprises a plurality of faceted segments. Each faceted segment is at least substantially flat. The turbine is coupled to receive the combusted air from the combustor.

Other independent features and advantages of the preferred apparatus will become apparent from the following detailed description, taken in conjunction with the accompanying drawings which illustrate, by way of example, the principles of the invention.

### BRIEF DESCRIPTION OF THE DRAWINGS

FIG. 1 is a simplified cross-sectional side view of an upper portion of an annular multi-spool turbofan gas turbine jet engine in accordance with an exemplary embodiment of the present invention;
FIG. 2 is an end view of a portion of a combustor section of a gas turbine engine, such as the multi-spool turbofan gas turbine jet engine of FIG. 1, in accordance with an exemplary embodiment of the present invention;
FIG. 3 is a close-up, plan view of a portion of the combustor section of FIG. 2; and
FIG. 4 is a simplified cross-sectional view of a portion of the combustor section of FIG. 2, shown with a heat shield disposed near the dome assembly, in accordance with an exemplary embodiment of the present invention.

### DETAILED DESCRIPTION OF A PREFERRED EMBODIMENT

Before proceeding with the detailed description, it is to be appreciated that the described embodiment is not limited to use in conjunction with a particular type of turbine engine. Thus, although the present embodiment is, for convenience of explanation, depicted and described as being implemented in a multi-spool turbofan gas turbine jet engine, it will be appreciated that it can be implemented in various other types of turbines engines, and in various other systems and environments.

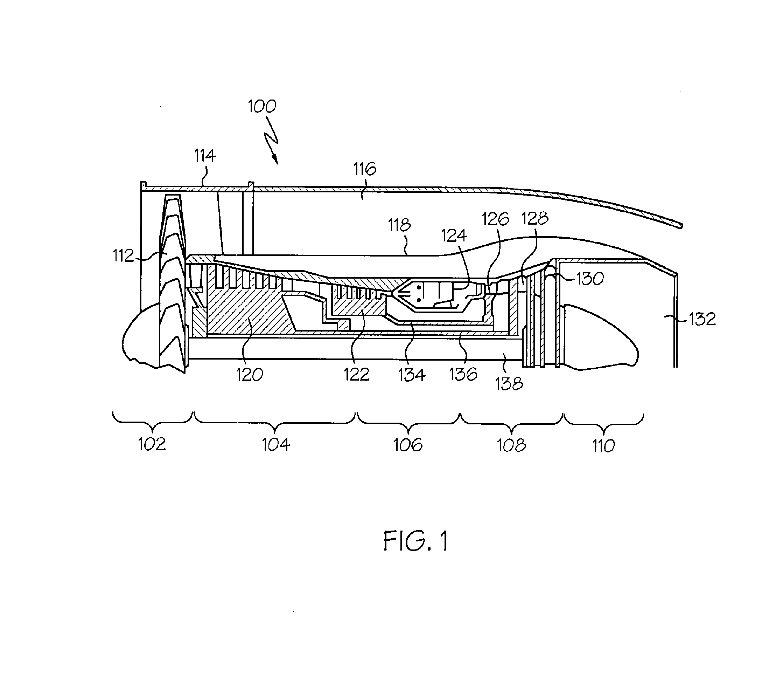

An exemplary embodiment of an upper portion of an annular multi-spool turbofan gas turbine jet engine 100 is depicted in FIG. 1. The engine 100 includes an intake section 102, a compressor section 104, a combustor section 106, a turbine section 108, and an exhaust section 110. The intake section 102 includes a fan 112, which is mounted in a fan case 114. The fan 112 draws air into the intake section 102 and accelerates it. A fraction of the accelerated air exhausted from the fan 112 is directed through a bypass section 116 disposed between the fan case 114 and an engine cowl 118, and provides a forward thrust. The remaining fraction of air exhausted from the fan 112 is directed into the compressor section 104.

In the embodiment of FIG. 1, the compressor section 104 includes two compressors, namely an intermediate pressure compressor 120 and a high pressure compressor 122. However, in other embodiments the number of compressors in the compressor section 104 may vary. In the depicted embodiment, the intermediate pressure compressor 120 raises the pressure of the air directed into it from the fan 112 and directs the compressed air into the high pressure compressor 122. The high pressure compressor 122 compresses the air still further, and directs a majority of the high pressure air into the combustor section 106. In addition, a fraction of the compressed air bypasses the combustor section 106 and is used to cool, among other components, turbine blades in the turbine section 108. In the combustor section 106, which includes an annular combustor 124, the high pressure air is mixed with fuel and combusted. The high-temperature combusted air is then directed into the turbine section 108.

In the embodiment of FIG. 1, the turbine section 108 includes three turbines disposed in axial flow series, namely, a high pressure turbine 126, an intermediate pressure turbine 128, and a low pressure turbine 130. However, it will be appreciated that the number of turbines, and/or the configurations thereof, may vary, as may the number and/or configurations of various other components of the exemplary engine 100. For example, in one alternate embodiment, the compressor section 104 includes a single compressor, and the turbine section 108 includes two turbines. It will be similarly appreciated that the number of compressors in the compressor section 104, the number of turbines in the turbine section 108, or both, may vary in other embodiments.

In the embodiment depicted in FIG. 1, the high-temperature combusted air from the combustor section 106 expands through each turbine, causing it to rotate. The air is then exhausted through a propulsion nozzle 132 disposed in the exhaust section 110, providing additional forward thrust. As the turbines rotate, each drives equipment in the engine 100 via shafts or spools. Specifically, the high pressure turbine 126 drives the high pressure compressor 122 via a high pressure spool 134, the intermediate pressure turbine 128 drives the intermediate pressure compressor 120 via an intermediate pressure spool 136, and the low pressure turbine 130 drives the fan 112 via a low pressure spool 138.

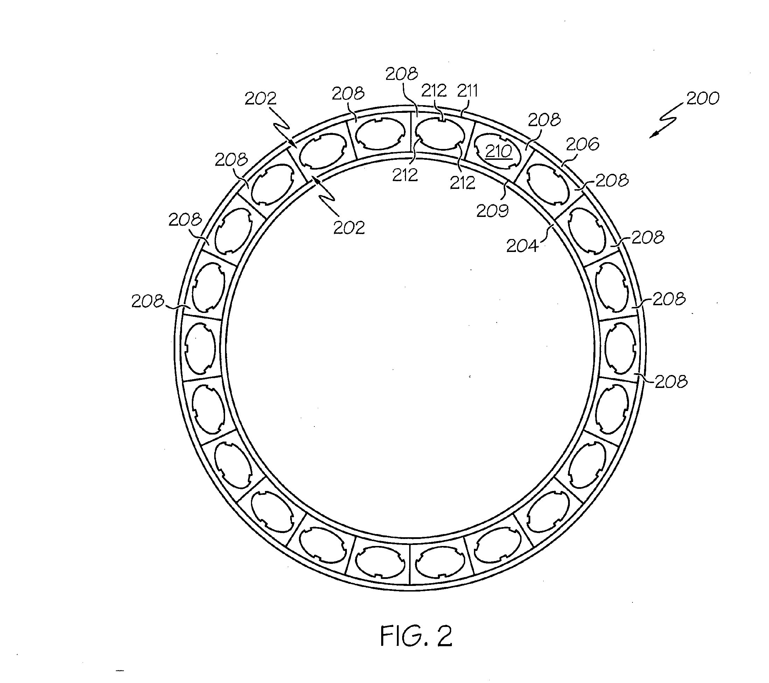

FIG. 2 is an end view of a portion of a combustor section 200 of a gas turbine engine, such as the multi-spool turbofan gas turbine jet engine 100 of FIG. 1, that includes a dome assembly 202, shown along with a portion of an inner liner 204 and an outer liner 206 of the combustor section 200, in accordance with an exemplary embodiment of the present invention. As shown in FIG. 2, the outer liner 206 circumscribes the inner liner 204. The dome assembly 202 is coupled to and disposed between the inner liner 204 and the outer liner 206.

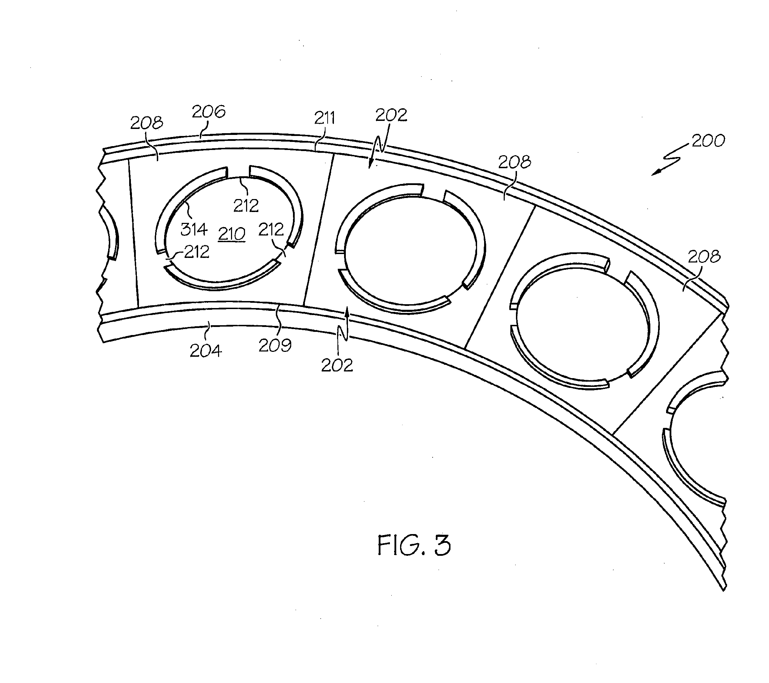

As depicted in FIG. 2, the dome assembly 202 comprises a plurality of faceted segments 208, a first wall 209, and a second wall 211. The plurality of faceted segments 208 are coupled together to form a dome structure. Each faceted segment 208 is at least substantially flat. Each faceted segment 208 includes an opening 210 to allow an atomizer (not depicted in FIG. 2) to be disposed at least partially within, to provide access for the atomizer to a combustion chamber (not depicted in FIG. 2) of the combustor section 200. As will be described in greater detail below in connection with FIGS. 2 and 3, each faceted segment 208 is also configured to have a heat shield disposed nearby, and each faceted segment 208 includes one or more blocking mechanisms 212 configured to at least minimize rotation of the heat shield, in a preferred embodiment.

In the depicted embodiment, the first wall 209 couples each faceted segment 208 to the inner liner 204. Likewise, the second wall 211 couples each faceted segment 208 to the outer liner 206. For example, in one preferred embodiment, the first wall 209 connects each faceted segment 208 to the inner liner 204, and the second wall 211 connects each faceted segment 208 to the outer liner 206. Also in a preferred embodiment, the first and second walls 209, 211 are at least partially conical in shape. In addition, in one preferred embodiment, the faceted segments 208 are welded together, and are also each welded to the first and second walls 209, 211, which in turn are welded to the inner and outer liners 204, 206.

FIG. 3 is a close-up, top view of a portion of the combustor section 200 of FIG. 2, showing a portion of the dome assembly 202, including some of the faceted segments 208 thereof and a portion of the first and second walls 209, 211, along with a portion of the inner liner 204 and outer liner 206 of the combustor section 200, in accordance with an exemplary embodiment of the present invention. In a preferred embodiment, each faceted segment 208 has a respective heat shield 314 disposed nearby. In FIG. 3, each heat shield 314 is depicted as being disposed at least substantially underneath a respective faceted segment 208. In a preferred embodiment, each heat shield 314 comprises a full coverage heat shield, as is commonly referred to in the industry, and is at least substantially flat in shape.

As shown in FIG. 3 as well as in FIG. 2, the blocking mechanisms 212 help to minimize, and preferably at least substantially prevent, rotation of the heat shields 314 proximate the respective faceted segments 208, in the depicted embodiment. In this embodiment, each faceted segment 208 includes three blocking mechanisms 212, and each blocking mechanism 212 comprises a clocking tab. Each clocking tab is configured to be disposed against a respective slot (not depicted in FIGS. 2 and 3) of a respective heat shield 314. In various other embodiments, one or more pins and/or other devices may be formed as part of, and/or may be disposed against, one of the heat shields 314 and/or a respective faceted segment 208, in order to minimize rotation of the heat shield 314.

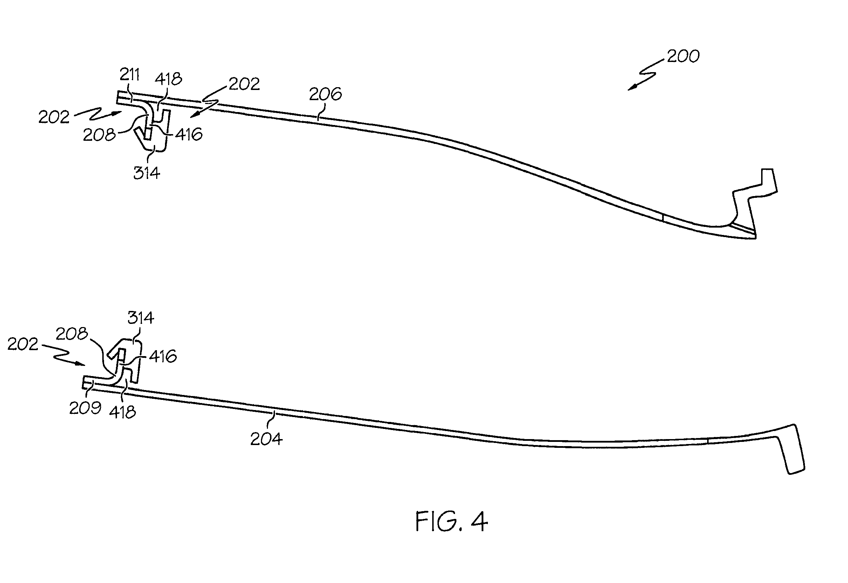

Also as shown in FIGS. 2 and 3, in a preferred embodiment, each of the individual, flat, faceted segments 208 are joined and connected together to form an annular ring for the dome assembly 202. In the depicted embodiment, there are twenty-two faceted segments 208 in the dome assembly 202 (depicted in FIG. 2), corresponding with twenty-two atomizers for the combustor section 200. The number of faceted segments 208 and/or atomizers may vary. However, in a preferred embodiment, the number of faceted segments 208 in the dome assembly 202 is equal to the number of atomizers in the combustor section 200. Also in a preferred embodiment, and as will be described in greater detail below in connection with FIG. 4, each heat shield 314 is at least partially mounted adjacent to a respective faceted segment 208, with a small and uniform gap existing between each heat shield 314 and a respective faceted segment 208.

FIG. 4 is a simplified cross-sectional view of a portion of the combustor section 200 of FIG. 2, shown with a representative heat shield 314 disposed near the dome assembly 202, and also shown along with a portion of the inner and outer liners 204, 206, in accordance with an exemplary embodiment of the present invention. As shown in FIG. 4, in a preferred embodiment, the heat shield 314 is preferably mounted at least in part adjacent to a respective faceted segment 208 of the dome assembly 202 via a mounting piece 416. Also in this preferred embodiment, the heat shield 314 is mounted such that a gap 418 is formed between the heat shield 314 and the respective faceted segment 208. The gap 418 allows for passage of cooling air therethrough, and also allows for thermal growth of the respective heat shield 314 and/or faceted segment 208.

Preferably, the gap 418 is uniform across the faceted segment 208. Additionally, preferably the various gaps 418 between the various heat shields 314 and their respective faceted segments 208 are uniform not only across each faceted segment 208, but are also uniform with respect to one another, for example being of a common size and shape across the entire dome assembly 202. The uniform nature of the gaps 418 is made possible due to the structure of the dome assembly 202 as described above in connection with the exemplary embodiments of FIGS. 2 and 3, and in particular due to the use of flat faceted segments 208. The uniform nature of the gaps 418 potentially results in a more even heat distribution in the combustor section 200, a reduction or elimination in "hot spots", and reduced wear on the combustor section 200 and various components thereof

Accordingly, an improved dome assembly 202 has been provided for a gas turbine engine that potentially results in more uniform gaps 418 between the dome assembly 202 and heat shields 314 disposed proximate thereto, and that potentially results in a more even heat distribution, and in reduced wear on the combustor and components thereof. In addition, a combustor section 200 for a gas turbine engine has been provided that includes such an improved dome assembly 202. Further, a gas turbine engine 100 has been provided that includes a combustor section 200 having such an improved dome assembly 202.

## Claims

1. A dome assembly (202) for a gas turbine engine (100), the dome assembly (202) comprising:
a plurality of flat faceted segments (208) coupled together to form a dome structure that is configured to be disposed between an inner liner (204) and an outer liner (206) that circumscribes the inner liner (204);
a plurality of openings (210), each opening (210) formed within a respective faceted segment (208) and configured to at least partially house an atomizer therein, **characterised in that** wherein each of the flat faceted segments (208) are joined and connected together to form an annular ring for the dome assembly; and
a plurality of heat shields (314), each of the heat shields mounted against a different respective one of the faceted segments such that a gap exists between each of the heat shields and the respective one of the faceted segments to which the heat shield is mounted, wherein each gap is uniform across the respective one of the faceted segments to which the heat shield is mounted, and wherein each gap is uniform with one another.

2. The dome assembly (202) of Claim 1, wherein:
each faceted segment (208) has a single opening (210) formed therein that is centered around the faceted segment.

3. The dome assembly (202) of Claim 1, wherein each faceted segment (208) further comprises a blocking mechanism (212) configured to minimize rotation of the heat shield (314) mounted thereto.

4. The dome assembly (202) of Claim 3, wherein each heat shield (314) has a plurality of mating slots, and the blocking mechanism (212) for each faceted segment (208) comprises three clocking tabs (212), each clocking tab (212) configured to be disposed against one of the plurality of mating slots (212) of a respective heat shield (314).

5. A combustor (106) for a gas turbine engine (100), comprising:
an inner liner (204);
an outer liner (206) circumscribing the inner liner (204);
a dome assembly (202) coupled to and disposed between the inner liner (204) and the outer liner (206), the dome assembly (202) as claimed in Claim 1 and wherein the dome assembly further comprises:
a conical first wall (209) coupling the plurality of flat faceted segments (208) to the inner liner (204); and
a conical second wall (211) coupling the plurality of flat faceted segments (208) to the outer liner (206), wherein the faceted segments (208) are welded together and each of the flat faceted segments (208) is welded to the first and second walls (209, 211).

6. The combustor (106) of Claim 5, wherein:
each faceted segment (208) includes a single opening (210) that is centered within the faceted segment.

7. The combustor (106) of Claim 6, further comprising: a plurality of heat shields (314), each heat shield (314) disposed proximate a respective faceted segment (208).

8. The combustor (106) of Claim 7, wherein each faceted segment (208) further comprises a blocking mechanism (212) configured to minimize rotation of the heat shield (314) disposed proximate thereto.

9. The combustor (106) of Claim 8, wherein each heat shield (314) has a plurality of mating slots (212), and the blocking mechanism (212) for each faceted segment (208) comprises three clocking tabs (212), each clocking tab (212) configured to be disposed against one of the plurality of mating slots (212) of a respective heat shield (314).

10. A gas turbine engine (100), comprising:
a compressor (104) having an inlet and an outlet and operable to supply compressed air;
a combustor (106) coupled to receive at least a portion of the compressed air from the compressor (104) and operable to supply combusted air, the combustor (106) comprising:
an inner liner (204);
an outer liner (206) circumscribing the inner liner (204); and -the dome assembly (202) of claim 1, and
a turbine (108) coupled to receive the combusted air from the combustor (106).

## Patentansprüche

1. Kuppelanordnung (202) für einen Gasturbinen-Verbrennungsmotor (100), wobei die Kuppelanordnung (202) Folgendes umfasst:
mehrere flache facettierte Segmente (208), die miteinander gekoppelt sind, um eine Kuppelstruktur zu bilden, die so konfiguriert ist, dass sie sich zwischen einer Innenhülle (204) und einer Außenhülle (206) befindet, die die Innenhülle (204) umschreibt;
mehrere Öffnungen (210), wobei jede Öffnung (210) innerhalb eines jeweiligen facettierten Segments (208) ausgebildet und so konfiguriert ist, dass darin mindestens teilweise ein Zerstäuber aufgenommen wird, **dadurch gekennzeichnet, dass** die flachen facettierten Segmente (208) jeweils zusammengefügt und miteinander verbunden sind, um einen ringförmigen Ring für die Kuppelanordnung zu bilden; und
mehrere Hitzeschilde (314), wobei jeder der Hitzeschilde gegen ein anderes jeweiliges Segment der facettierten Segmente so montiert ist, dass sich zwischen jedem der Hitzeschilde und dem jeweiligen Segment der facettierten Segmente, an dem der Hitzeschild montiert ist, ein Spalt ergibt, wobei jeder Spalt über das jeweilige Segment der facettierten Segmente, an dem der Hitzeschild montiert ist, einheitlich ist, und wobei jeder Spalt zueinander einheitlich ausgebildet ist.

2. Kuppelanordnung (202) nach Anspruch 1, bei der:
jedes facettierte Segment (208) eine darin ausgebildete einzelne Öffnung (210) hat, die um das facettierte Segment herum zentriert ist.

3. Kuppelanordnung (202) nach Anspruch 1, bei der jedes facettierte Segment (208) weiterhin einen Blockiermechanismus (212) umfasst, der so konfiguriert ist, dass eine Drehung des daran montierten Hitzeschildes (314) minimiert wird.

4. Kuppelanordnung (202) nach Anspruch 3, bei der jeder Hitzeschild (314) mehrere passend ausgebildete Schlitze aufweist, wobei der Blockiermechanismus (212) für jedes facettierte Segment (208) drei Taktlaschen (212) umfasst, und wobei jede Taktlasche (212) so konfiguriert ist, dass sie gegen einen der mehreren passend ausgebildeten Schlitze (212) eines jeweiligen Hitzeschildes (314) montiert ist.

5. Brennkammer (106) für einen Gasturbinen-Verbrennungsmotor (100), die Folgendes umfasst:
eine Innenhülle (204);
eine Außenhülle (206), die die Innenhülle (204) umschreibt;
eine Kuppelanordnung (202), die sich zwischen der Innenhülle (204) und der Außenhülle (206) befindet und damit gekoppelt ist, wobei die Kuppelanordnung (202) Anspruch 1 entspricht, und wobei die Kuppelanordnung weiterhin Folgendes umfasst:
eine konische erste Wand (209), die die mehreren flachen facettierten Segmente (208) mit der Innenhülle (204) verbindet; und
eine konische zweite Wand (211), die die mehreren flachen facettierten Segmente (208) mit der Außenhülle (206) verbindet, wobei die facettierten Segmente (208) miteinander verschweißt sind, und wobei jedes der flachen facettierten Segmente (208) mit der ersten und der zweiten Wand (209, 211) verschweißt ist.

6. Brennkammer (106) nach Anspruch 5, bei der:
jedes facettierte Segment (208) eine einzelne Öffnung (210) beinhaltet, die innerhalb des facettierten Segments zentriert ist.

7. Brennkammer (106) nach Anspruch 6, die weiterhin Folgendes umfasst:
mehrere Hitzeschilde (314), wobei jeder Hitzeschild (314) sich in der Nähe eines jeweiligen facettierten Segments (208) befindet.

8. Brennkammer (106) nach Anspruch 7, bei der jedes facettierte Segment (208) weiterhin einen Blockiermechanismus (212) umfasst, der so konfiguriert ist, dass eine Drehung des in seiner Nähe befindlichen Hitzeschildes (314) minimiert wird.

9. Brennkammer (106) nach Anspruch 8, bei der jeder Hitzeschild (314) mehrere passend ausgebildete Schlitze (212) hat, und wobei der Blockiermechanismus (212) für jedes facettierte Segment (208) drei Taktlaschen (212) umfasst, und wobei jede Taktlasche (212) so konfiguriert ist, dass sie gegen einen der mehreren passend ausgebildeten Schlitze (212) eines jeweiligen Hitzeschildes (314) montiert ist.

10. Gasturbinen-Verbrennungsmotor (100), der Folgendes umfasst:
einen Kompressor (104) mit einem Einlass und einem Auslass, wobei der Kompressor ausgelegt ist, um Druckluft zuzuführen;
eine Brennkammer (106), die so gekoppelt ist, dass sie mindestens einen Teil der Druckluft vom Kompressor (104) aufnehmen und verbrannte Luft bereitstellen kann, wobei die Brennkammer (106) Folgendes umfasst:
eine Innenhülle (204);
eine Außenhülle (206), die die Innenhülle (204) umschreibt; und
die Kuppelanordnung (202) nach Anspruch 1 sowie eine Turbine (108), die so gekoppelt ist, dass sie die verbrannte Luft von der Brennkammer (106) aufnehmen kann.

## Revendications

1. Ensemble de dôme (202) pour moteur (100) à turbine à gaz, l'ensemble de dôme (202) comprenant :
plusieurs segments plats (208) en facette accouplés les uns avec les autres pour former une structure en dôme configurée de manière à être disposés entre une garniture intérieure (204) et une garniture extérieure (206) qui entoure la garniture intérieure (204),
plusieurs ouvertures (210), chaque ouverture (210) étant formée dans un segment (208) respectif en facette et configurées pour loger au moins un pulvériseur, **caractérisé en ce que**
les segments plats (208) en facette étant reliés et raccordés les uns aux autres pour former un anneau annulaire pour l'ensemble de dôme et
**en ce que** plusieurs écrans thermiques (314) sont prévus, chaque écran thermique étant monté contre un segment en facette respectif de telle sorte qu'il existe un interstice entre chacun des écrans thermiques et le segment en facette respectif sur lequel l'écran thermique est monté, chaque interstice étant uniforme sur chaque segment en facette respectif sur lequel l'écran thermique est monté, tous les interstices étant identiques les uns aux autres.

2. Ensemble de dôme (202) selon la revendication 1, dans lequel une seule ouverture (210) est formée dans chaque segment (208) en facette et est centrée sur le segment en facette.

3. Ensemble de dôme (202) selon la revendication 1, dans lequel chaque segment (208) en facette comprend en outre un mécanisme de blocage (212) configuré pour minimiser la rotation de l'écran thermique (314) qui y est monté.

4. Ensemble de dôme (202) selon la revendication 3, dans lequel chaque écran thermique (314) présente plusieurs fentes d'assemblage, le mécanisme de blocage (212) de chaque segment (208) en facette comprenant trois pattes (212) en arc de cercle, chaque patte (212) en arc de cercle étant configurée de manière à être disposée contre l'une des différentes fentes de montage (212) d'un écran thermique (314) respectif.

5. Brûleur (106) pour moteur (100) à turbine à gaz, comprenant
une garniture intérieure (204),
une garniture extérieure (206) entourant la garniture intérieure (204),
un ensemble de dôme (202) accouplé à la garniture intérieure (204) et à la garniture extérieure (206) et disposé entre elles, l'ensemble de dôme (202) étant selon la revendication 1, l'ensemble de dôme comprenant en outre :
une première paroi conique (209) raccordant les différents segments plats (208) en facette à la garniture intérieure (204) et
une deuxième paroi conique (211) qui raccorde les différents segments plats (208) en facette à la garniture extérieure (206), les segments (208) en facette étant soudés ensemble et chacun des segments plats (208) en facette étant soudé sur la première et la deuxième paroi (209, 211).

6. Brûleur (106) selon la revendication 5, dans lequel chaque segment (208) en facette comprend une unique ouverture (210) centrée sur le segment en facette.

7. Brûleur (106) selon la revendication 6, comprenant en outre plusieurs écrans thermiques (314), chaque écran thermique (314) étant disposé à proximité d'un segment (208) en facette respectif.

8. Brûleur (106) selon la revendication 7, dans lequel chaque segment (208) en facette comprend en outre un mécanisme de blocage (212) configuré pour minimiser la rotation de l'écran thermique (314) disposé à sa proximité.

9. Brûleur (106) selon la revendication 8, dans lequel chaque écran thermique (314) présente plusieurs fentes d'assemblage, le mécanisme de blocage (212) de chaque segment (208) en facette comprenant trois pattes (212) en arc de cercle, chaque patte (212) en arc de cercle étant configurée de manière à être disposée contre l'une des différentes fentes de montage (212) d'un écran thermique (314) respectif.

10. Moteur (100) à turbine à gaz, comprenant
un compresseur (104) doté d'une entrée et d'une sortie et apte à fonctionner pour délivrer de l'air comprimé,
un brûleur (106) raccordé de manière à recevoir au moins une partie de l'air comprimé par le compresseur (104) et apte à fonctionner pour délivrer de l'air brûlé, le brûleur (106) comprenant :
une garniture intérieure (204),
une garniture extérieure (206) entourant la garniture intérieure (204) et l'ensemble de dôme (202) selon la revendication 1, ainsi qu'une turbine (108) raccordée de manière à recevoir l'air brûlé provenant du brûleur (106).
